# EUROPÄISCHE PATENTSCHRIFT

(11) **EP 2 287 551 B1**
(45) Veröffentlichungstag und Bekanntmachung des Hinweises auf die Patenterteilung: **18.03.2015**
(21) Anmeldenummer: 10160285.2
(22) Anmeldetag: 19.04.2010
(51) Int. Cl.: F28D 21/00, F28F 27/02, F24C 15/00

(54) **Nachheizregister für Feuerungsanlage**
Reheating register for combustion assemblies
Batterie chaude terminale pour installation de combustion

(30) Priorität: 08.07.2009 DE 102009032403
(43) Veröffentlichungstag der Anmeldung: 23.02.2011
(73) Patentinhaber: Eisenschmid, Jakob, 86971 Peiting (DE)
(72) Erfinder: Eisenschmid, Jakob, 86971 Peiting (DE)
(74) Vertreter: Gebauer, Dieter Edmund

(56) Entgegenhaltungen:
- WO-A1-03/085327
- BE-A2- 885 546
- DE-A1-102005 002 450
- DE-U1- 29 814 772

## Beschreibung

Die vorliegende Erfindung liegt auf dem technischen Gebiet der Heizanlagen und betrifft nach ihrer Gattung ein Nachheizregister für eine Feuerungsanlage zur Raumbeheizung, wie beispielsweise ein Kachelofen, Kaminofen und dergleichen.

Mit Holzscheiten oder Holzpellets betreibbare Feuerungsanlagen zur Raumbeheizung erfreuen sich zunehmender Beliebtheit. Grund hierfür ist, neben dem behaglichen Wohnklima, unter anderem die Möglichkeit einer effizienten und umweltschonenden Nutzung der Biomasse "Holz", die dazu beiträgt, die Erzeugung der so genannten Treibhausgase, welche für die globale Erderwärmung verantwortlich zeichnen, zu verringern. Die Verwendung von Holzbrennstoffen findet überwiegend im Bereich privat genutzter Wohngebäude statt.

In einer gängigen Bauweise umfassen Kachel- und Kaminöfen einen aus Gusseisen oder Stahl bestehenden Heizeinsatz, durch den ein Feuer- bzw. Brennraum geformt ist. In den Brennraum münden eine Brennluftzufuhr zum Zuleiten von Brennluft für die Verbrennung von Brennstoff und ein Rauchgasabzug, durch den die bei der Verbrennung entstehenden Rauchgase abgezogen werden. Über eine durch eine Brennraumtür verschließbare Zugangsöffnung kann der Brennraum mit Brennstoff befüllt werden, wobei häufig eine gläserne Brennraumtür im Sichtbereich angeordnet ist. Der Heizeinsatz ist von einer meist gemauerten Außenwand umgeben.

In herkömmlichen Kachel- und Kaminöfen können - abhängig von Art und Menge des verwendeten Brennstoffs - die Rauchgase im Dauerbetrieb Temperaturen von typischer Weise 500°C bis 600°C erreichen. Zumindest kurzzeitig können die Rauchgastemperaturen auch weit höher liegen und beispielsweise bis zu 1000°C erreichen. Um eine Überhitzung des die heißen Rauchgase zum Kamin führenden Rauchgasrohrs zu vermeiden, ist es in der Regel erforderlich, dass die aus dem Heizeinsatz austretenden Rauchgase abgekühlt werden. Zu diesem Zweck werden die heißen Rauchgase aus dem Heizeinsatz über ein Rauchgasrohr einem so genannten "Nachheizregister" zugeführt, das seinerseits über ein weiteres Rauchgasrohr mit dem Kamin oder Schornstein verbunden ist. Bei dem Nachheizregister handelt es sich typischer Weise um ein kastenförmiges Blech- oder Stahlgehäuse, das einen Hohlraum formt, in dem ein die Rauchgase wenigstens einmal umlenkender Strömungspfad ausgebildet ist. Zum Zwecke einer Strömungsumlenkung der Rauchgase ist typische Weise eine nicht ganz bis zum Boden reichende, vertikale Trennwand vorgesehen. Die in das Nachheizregister eintretenden heißen Rauchgase heizen die Gehäusewand auf und werden auf diese Weise gekühlt, so dass eine Überhitzung des zum Kamin führenden Rauchgasrohrs vermieden werden kann. Über die erhitzte Gehäusewand des Nachheizregisters wird Strahlungswärme abgegeben, so dass über diese zusätzliche Heizfläche der Wirkungsgrad des Ofens verbessert wird.

Gattungsgemäße Nachheizregister sind als solche aus der Praxis wohlbekannt. Sie werden in modernen Kachel- und Kaminöfen häufig eingesetzt. In der Patentliteratur ist ein gattungsgemäßes Nachheizregister beispielsweise in der deutschen Offenlegungsschrift DE 3324371 A1 beschrieben.

### Aufgabenstellung

Demgegenüber besteht die Aufgabe der vorliegenden Erfindung darin, ein gattungsgemäßes Nachheizregister in vorteilhafter Weise weiterzubilden.

Diese und weitere Aufgaben werden nach dem Vorschlag der Erfindung durch ein Nachheizregister mit den Merkmalen des unabhängigen Anspruchs gelöst. Vorteilhafte Ausgestaltungen der Erfindung sind durch die Merkmale der Unteransprüche angegeben.

Nach seiner Gattung umfasst das erfindungsgemäße Nachheizregister ein Gehäuse, das einen Hohlraum formt, in den ein mit einem Feuerraum der Feuerungsanlage verbindbarer Rauchgaseinlass und ein mit einem Kamin verbindbarer Rauchgasauslass münden, wobei Rauchgasein- und Rauchgasauslass durch wenigstens einen Strömungskanal für Rauchgase strömungstechnisch (fluidleitend) miteinander verbunden sind.

Das für eine Rauchgasumlenkung geeignet ausgebildete Nachheizregister zeichnet sich in wesentlicher Weise dadurch aus, dass im Hohlraum ein erster Strömungskanal für Rauchgase und ein zumindest abschnittsweise vom ersten Strömungskanal verschiedener zweiter Strömungskanal für Rauchgase geformt sind. Dabei ist der erste Strömungskanal so ausgebildet, dass die darin strömenden Rauchgase mit einem Wärmetauscher thermisch gekoppelt sind. Zu diesem Zweck ist der Wärmetauscher beispielsweise in den ersten Strömungskanal eingesetzt und kann von den Rauchgasen durchströmt werden. Der zweite Strömungskanal ist so ausgebildet, dass die darin strömenden Rauchgase zumindest von einem Teil des Wärmetauschers thermisch entkoppelt sind, zu welchem Zweck der zweite Strömungskanal wenigstens einen Teil des Wärmetauschers umgeht. Wie üblich dient der Wärmetauscher zum Abkühlen der Rauchgase, indem Wärme von den Rauchgasen auf ein durch den Wärmetauscher zirkulierendes Fluid, das beispielsweise mit einem Pufferspeicher für Warmwasser thermisch gekoppelt sein kann, übertragen wird.

Erfindungsgemäß ist der zweite Strömungskanal durch ein Sperrelement, das mittels eines Bewegungsmechanismus wahlweise in eine Öffnungs- und Schließstellung gebracht werden kann, mit dem Rauchgaseinlass verbindbar und zumindest abschnittsweise vom Rauchgaseinlass trennbar. Das heißt, der zweite Strömungskanal ist mit dem Rauchgaseinlass verbunden, wenn sich das Sperrelement in Öffnungsstellung befindet und vom Rauchgaseinlass getrennt, wenn sich das Sperrelement in Schließstellung befindet. Durch diese Maßnahme kann in vorteilhafter Weise erreicht werden, dass der zweite Strömungskanal wahlfrei, beispielsweise bei relativ niedrigen Rauchgastemperaturen während der Anheizphase der Feuerungsanlage, mit dem Rauchgaseinlass strömungstechnisch verbunden wird. Hierdurch kann eine (zu starke) Abkühlung der Rauchgase durch den Wärmetauscher vermieden werden, so dass einer unerwünschten Taupunktunterschreitung der Rauchgase im Kamin bzw. Schornstein mit der Gefahr einer Versottung entgegen gewirkt wird.

Der zweite Strömungskanal ist so ausgebildet, dass die darin strömenden Rauchgase zumindest mit einem Teil des Wärmetauschers, das heißt mit einem Teil einer Wärmeübertragungsfläche, die einer thermischen Kopplung mit den Rauchgasen dient, thermisch nicht gekoppelt ist bzw. diesen Teil umgeht. Vorteilhaft umgeht der zweite Strömungskanal zu diesem Zweck einen größeren ersten Teil der Wärmeübertragungsfläche (bzw. ist mit diesem größeren ersten Teil der Wärmeübertragungsfläche thermisch nicht gekoppelt), während er lediglich mit einem kleineren zweiten Teil der Wärmeübertragungsfläche thermisch gekoppelt ist. Besonders vorteilhaft ist der erste Teil des Wärmetauschers wesentlich, insbesondere um ein Vielfaches, größer als der zweite Teil der Wärmeübertragungsfläche, so dass entlang des zweiten Strömungskanals nur eine sehr geringe Wärmeübertragung von den Rauchgasen an das Fluid im Wärmetauscher erfolgt. Den Rauchgasen wird somit nur sehr wenig Wärme durch den Wärmetauscher entzogen.

Bei einer vorteilhaften Ausgestaltung des erfindungsgemäßen Nachheizregisters ist der zweite Strömungskanal so ausgebildet, dass die darin strömenden Rauchgase vom Rauchgaseinlass bis zum Rauchgasauslass vom Wärmetauscher thermisch entkoppelt, das heißt, der zweite Strömungskanal umgeht den Wärmetauscher vollständig, so dass (praktisch) keine Wärmeübertragung von den Rauchgasen an das Fluid im Wärmetauscher erfolgt.

Beispielsweise kann das Sperrelement zu diesem Zweck so ausgebildet sein, dass das Sperrelement in Öffnungsstellung, in welcher der zweite Strömungskanal mit dem Rauchgaseinlass verbunden ist, den ersten Strömungskanal stromaufwärts des Wärmetauschers versperrt, so dass die Rauchgase nicht mehr durch den Wärmetauscher strömen können. Somit kann durch vollständiges Ableiten der Rauchgase über den zweiten Strömungskanal eine vollständige thermische Entkopplung des Wärmetauschers von den Rauchgasen erreicht werden. Diese Maßnahme ermöglicht insbesondere, dass im Notfall, beispielsweise bei Stromausfall, der Wärmetauscher vor einer Überhitzung mit der Gefahr einer Explosion durch verdampfendes Fluid geschützt werden kann.

Bei einer weiteren vorteilhaften Ausgestaltung des erfindungsgemäßen Nachheizregisters umfasst der erste Strömungskanal einen ersten Kanalabschnitt und einen stromabwärts des ersten Kanalabschnitts angeordneten zweiten Kanalabschnitt. Dabei ist der erste Kanalabschnitt so ausgebildet, dass darin strömendende Rauchgase mit dem Wärmetauscher thermisch gekoppelt sind, während der zweite Kanalabschnitt so ausgebildet ist, dass darin strömende Rauchgase vom Wärmetauscher thermisch entkoppelt und zumindest abschnittsweise mit dem Gehäuse thermisch gekoppelt sind. Der Wärmetauscher ist somit nur mit einem Teil bzw. Abschnitt des ersten Strömungskanals thermisch gekoppelt. Durch diese Maßnahme kann in vorteilhafter Weise erreicht werden, dass die durch den ersten Strömungskanal strömenden Rauchgase sowohl das Fluid im Wärmetauscher, beispielsweise zur Warmwasserbereitung, als auch das Gehäuse des Nachheizregisters zum Erzeugen von Strahlungswärme erhitzen. Der Nutzer kann die Energie der Rauchgase somit sowohl für die Warmwasserbereitung als auch für die Raumheizung nutzen. Wird beispielsweise ein bestehendes Nachheizregister mit einem Wärmetauscher nachgerüstet, so steht weiterhin eine gewisse Heizleistung zur Raumheizung über das Gehäuse des Nachheizregisters zur Verfügung. Dabei kann der Wärmetauscher beispielsweise so ausgelegt sein, dass ein bestimmter, wählbarer erster Anteil der von den Rauchgasen abgegebenen Wärme an den Wärmetauscher und ein entsprechender zweiter Anteil an das Gehäuse abgegeben wird. Beispielsweise kann ca. 50% der von den Rauchgasen abgegebenen Wärme zur Fluiderhitzung im Wärmetauscher und ca. 50% zur Gehäuseerhitzung genutzt werden. Jedenfalls wird ein von Null verschiedener Anteil der von den Rauchgasen abgegebenen Wärme zur Erhitzung des Gehäuses genutzt. In diesem Fall kann es von Vorteil sein, wenn der zweite Kanalabschnitt zumindest abschnittsweise mit einem Wärme speichernden Material, beispielsweise Schamottesteinen, ausgekleidet ist. Durch diese Maßnahme kann einer zu starken Abkühlung bzw. Unterkühlung der Rauchgase mit der Gefahr einer Versottung von Schornstein bzw. Kamin entgegen gewirkt werden.

Bei einer weiteren vorteilhaften Ausgestaltung des erfindungsgemäßen Nachheizregisters ist der zweite Strömungskanal so ausgebildet, dass die darin strömenden Rauchgase stromabwärts des Stellelments vom Wärmetauscher thermisch entkoppelt und zumindest abschnittsweise mit dem Gehäuse thermisch gekoppelt sind. Durch diese Maßnahme kann in vorteilhafter Weise erreicht werden, dass durch den zweiten Strömungskanal strömende Rauchgase das Gehäuse des Nachheizregisters zum Erzeugen von Strahlungswärme erhitzen, wodurch der Wirkungsgrad der Feuerungsanlage insgesamt verbessert wird. Da den Rauchgasen durch Erhitzen des Gehäuses typischer Weise weitaus weniger Wärme entzogen wird als durch den Wärmetauscher, ist eine zu starke Abkühlung der Rauchgase in der Regel nicht zu befürchten. Gleichwohl kann es von Vorteil sein, wenn der zweite Strömungskanal stromabwärts des Stellelments zumindest abschnittsweise mit einem Wärme speichernden Material, beispielsweise Schamottesteinen, ausgekleidet ist, um einer zu starke Abkühlung der Rauchgase entgegen zu wirken.

Bei einer weiteren vorteilhaften Ausgestaltung des erfindungsgemäßen Nachheizregisters ist der Wärmetauscher in Form eines austauschbaren Moduls ausgebildet. Diese Maßnahme ermöglicht ein einfaches und kostengünstiges Nachrüsten bestehender Nachheizregister mit einem Wärmetauscher. Vorteilhaft wird der Wärmetauscher zu diesem Zweck in den ersten Strömungskanal eingesetzt und ist von Rauchgas durchströmbar.

Bei einer weiteren vorteilhaften Ausgestaltung des erfindungsgemäßen Nachheizregisters ist der Wärmetauscher mit einer thermischen Ablaufsicherung koppelbar. Die Ablaufsicherung umfasst typischer Weise einen Temperaturfühler zum Messen der Temperatur des im Wärmetauscher zirkulierenden Fluids, sowie einen über ein Ventil geschlossenen Wasserzulauf, der mit einem Wasserablauf kommuniziert, wobei das Ventil mit dem Temperaturfühler so wirkgekoppelt ist, dass es aufmacht, wenn die Temperatur des Fluids einen wählbaren Schwellwert übersteigt. Durch diese Maßnahme kann eine Überhitzung des Wärmetauschers vermieden werden.

Bei einer weiteren vorteilhaften Ausgestaltung des erfindungsgemäßen Nachheizregisters ist der Wärmetauscher auf einer Außenseite des Gehäuses angebracht. Durch diese Maßnahme wird die Möglichkeit einer besonders einfachen Montage des Wärmetauschers, insbesondere für das Nachrüsten bestehender Nachheizregister, geschaffen. Besonders vorteilhaft ist der Wärmetauscher derart auf der Außenseite des Gehäuses angebracht ist, dass er mit der Feuerungsanlage bzw. einer Brennkammer oder dem Heizeinsatz der Feuerungsanlage thermisch koppelbar ist. In diesem Fall kann Wärme sowohl von der Feuerungsanlage als auch von den Rauchgasen auf den Wärmetauscher übertragen werden. Zudem kann das Nachheizregister in vorteilhafter Weise näher zur Feuerungsanlage platziert werden. Ein ansonsten einzuhaltender Mindestabstand, der für eine ausreichende Kühlung der Rauchgase im Nachheizregister notwendig ist, kann dabei unterschritten werden. Der Platzbedarf der Feuerungsanlage, einschließlich Nachheizregister, kann dadurch in vorteilhafter Weise verringert werden.

Bei einer weiteren vorteilhaften Ausgestaltung des erfindungsgemäßen Nachheizregisters umgibt der Wärmetauscher bzw. dessen Wärmeübertragungsfläche den ersten Strömungskanal nur teilweise, d. h. die Wärmeübertragungsfläche begrenzt nur teilweise den ersten Strömungskanal im Bereich des Wärmetauschers, so dass die von den Rauchgasen an das Fluid übertragene Wärme gegenüber dem alternativen Fall, in dem der Wärmetauscher den ersten Störmungskanal vollständig umgibt, verringert ist. Durch diese Maßnahme kann die von den Rauchgasen abgegebene Wärme in gewünscher Weise gezielt eingestellt werden.

Bei einer weiteren vorteilhaften Ausgestaltung des erfindungsgemäßen Nachheizregisters umfasst das Sperrelement ein Stellelement, das einer Durchbrechung in einer den zweiten Strömungskanal vom Rauchgaseinlass trennenden Trennwand zugeordnet ist, wobei das Stellelement in Öffnungsstellung die Durchbrechung freigibt und in Schließstellung die Durchbrechung verschließt. Durch diese Maßnahme kann das Sperrelement technisch einfach und kostengünstig realisiert werden.

Bei einer weiteren vorteilhaften Ausgestaltung des erfindungsgemäßen Nachheizregisters sind in Öffnungsstellung des Sperrelements der Rauchgaseinlass und der Rauchgasauslass durch die beiden Strömungskanäle jeweils strömungstechnisch (fluidleitend) miteinander verbunden, wobei die beiden Strömungskanäle so ausgebildet sind, dass bei einem am Rauchgasauslass wirkenden Unterdruck über den Rauchgaseinlass herangeführte Rauchgase überwiegend durch den zweiten Strömungskanäl strömen. Durch diese Maßnahme kann eine einfache thermische Entkopplung der im zweiten Strömungskanal strömenden Rauchgase zumindest von einem Teil des Wärmetauschers erreicht werden.

Bei einer weiteren vorteilhaften Ausgestaltung des erfindungsgemäßen Nachheizregisters ist das Sperrelement, insbesondere das oben genannte Stellelement, über einen mechanischen Bewegungsmechanismus in seine Öffnungs- und Schließstellung bewegbar, wobei der Bewegungsmechanismus eine Handhabe zum manuellen Bewegen des Sperrelements, insbesondere des Stellelement, umfasst.

Bei einer weiteren vorteilhaften Ausgestaltung des erfindungsgemäßen Nachheizregisters umfasst der Bewegungsmechanismus ein mit einem Temperaturfühler thermisch gekoppeltes Bimetall, durch das das Sperrelement, insbesondere das oben genannte Stellelement, in Öffnungs- und Schließstellung gebracht werden kann, wobei der Bewegungsmechanismus mit einem mit dem Rauchgas stromaufwärts des Wärmetauschers thermisch koppelbaren Temperaturfühler derart wirkverbunden ist, dass das Sperrelement, insbesondere das oben genannte Stellelement, bei ansteigender Rauchgastemperatur bei Erreichen einer wählbaren Schwelltemperatur in seine Schließstellung und bei absinkender Rauchgastemperatur bei Unterschreiten der Schwelltemperatur in seine Öffnungsstellung gebracht wird.

In dem erfindungsgemäßen Nachheizregister kann das Stellelement beispielsweise in Form einer schwenkbaren Stellklappe ausgebildet sein, was eine besonders einfache technische Realisierung ermöglicht. Das Gehäuse kann beispielsweise mit höhenverstellbaren Stellfüßen ausgestattet sein, um das Nachheizregister bedarfsgerecht in seiner Höhe zu verstellen. Weiterhin kann das Gehäuse mit zumindest einer in den Hohlraum mündenden, durch einen Deckel verschließbaren Reinigungsöffnung versehen sein.

Die Erfindung erstreckt sich weiterhin auf eine Feuerungsanlage zur Raumbeheizung, die mit einem wie oben beschriebenen Nachheizregister ausgestattet ist, wobei ein Heizeinsatz der Feuerungsanlage strömungstechnisch (fluidleitend) mit dem Nachheizregister verbunden ist. Bei einer vorteilhaften Ausgestaltung der erfindungsgemäßen Feuerungsanlage ist der Wärmetauscher auf der Außenseite des Gehäuses so angebracht, dass er mit der Feuerungsanlage bzw. dem Heizeinsatz thermisch gekoppelt ist.

Es versteht sich, dass die vorstehend genannten und nachstehend zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Ausführungsbeispiel

Die Erfindung wird nun anhand von Ausführungsbeispielen näher erläutert, wobei Bezug auf die beigefügten Zeichnungen genommen wird. Es zeigen
- Fig. 1A-1B: eine schematische Aufsicht und Schnittdarstellung eines ersten Ausführungsbeispiels des erfindungsgemäßen Nachheizregisters;
- Fig. 2: ein schematische Darstellung zur Veranschaulichung eines manuellen Bewegungsmechanismus zum Bewegen der Stellklappe des Nachheizregisters von Fig. 1A-1B;
- Fig. 3: ein schematische Darstellung zur Veranschaulichung eines selbstätigen Bewegungsmechanismus zum Bewegen der Stellklappe des Nachheizregisters von Fig. 1A-1B;
- Fig. 4: eine schematische Schnittdarstellung eines zweiten Ausführungsbeispiels des erfindungsgemäßen Nachheizregisters;
- Fig. 5: ein schematische perspektivische Darstellung des Nachheizregisters von Fig. 4 zur Veranschaulichung der Rauchgasströmung bei geschlossener Stellklappe;
- Fig. 6: ein schematische perspektivische Darstellung des Nachheizregisters von Fig. 4 zur Veranschaulichung der Rauchgasströmung bei geöffneter Stellklappe;
- Fig. 7: ein schematische Schnittdarstellung des Nachheizregisters von Fig. 4 zur Veranschaulichung des Wärmetauschers;
- Fig. 8: ein schematische perspektivische Darstellung des Wärmetauschers des Nachheizregisters von Fig. 4.

Im Folgenden gemachte Lage- und Richtungsangaben, wie oben, unten, vorne, hinten, links, rechts, horizontal und vertikal beziehen sich lediglich auf die Orientierung der in den Figuren dargestellten Ausführungsbeispiele und sollen die Erfindung in keiner Weise hierauf einschränken.

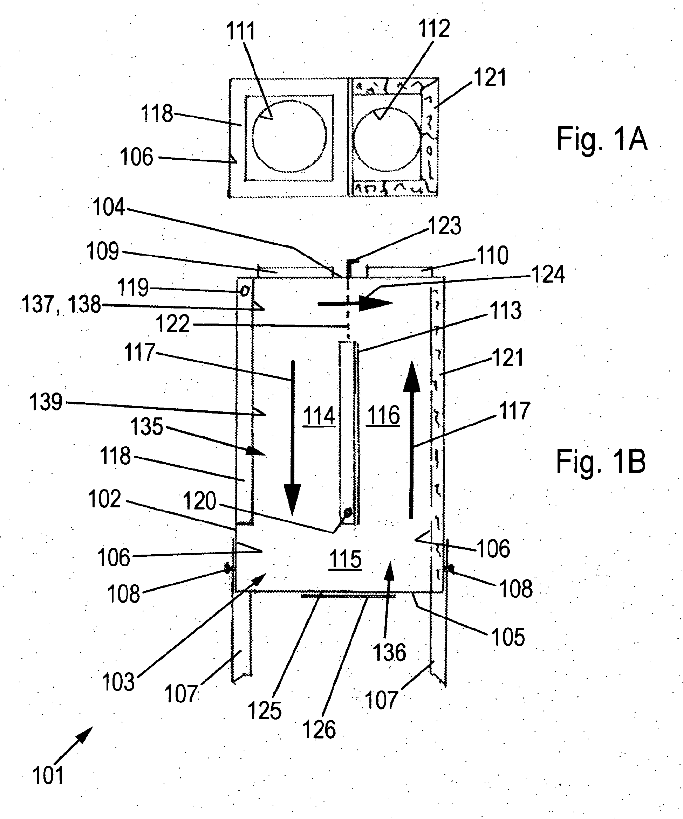

Zunächst wird Bezug auf die Figuren 1A und 1B genommen, worin in einer schematischen Aufsicht (Fig. 1A) und einer schematischen Vertikalschnittdarstellung (Fig. 1B) ein erstes Ausführungsbeispiel des erfindungsgemäßen Nachheizregisters für eine Feuerungsanlage zur Raumbeheizung, wie ein Kachel- oder Kaminofen, veranschaulicht ist. Demnach umfasst das insgesamt mit der Bezugszahl 101 bezeichnete Nachheizregister ein beispielsweise aus Gusseisen oder Stahlblech gefertigtes Gehäuse 102, das einen Hohlraum 103 umgibt. Das hier beispielsweise kastenförmige Gehäuse 102 setzt sich aus einer Deckwand 104, einer Bodenwand 105 und vier Seitenwänden 106 zusammen. Das Gehäuse 102 kann auf vier Stellfüßen 107 aufgestellt werden. Die über Befestigungsbolzen 108 am Gehäuse 102 angebrachten Stellfüße 107 sind in ihrer Höhe verstellbar, was beispielsweise dadurch erreicht werden kann, dass sie jeweils mit mehreren vertikal versetzten Durchstellungen oder einem vertikal orientierten Langloch mit mehreren Raststufen zur Aufnahme des Befestigungsbolzens 108 versehen sind.

Auf der vom Hohlraum 103 abgewandten Außenseite der Deckwand 104 ist ein erster Rohrstutzen 109 zur strömungstechnischen Verbindung des Nachheizregisters 101 mit einem Heizeinsatz der Feuerungsanlage angeformt. Der erste Rohrstutzen 109 kann beispielsweise über ein (nicht dargestelltes) Rauchgasrohr mit dem Heizeinsatz verbunden werden. Innerhalb des ersten Rohrstutzens 109 ist in der Deckwand 104 eine in den Hohlraum 103 mündende Einlasslöffnung 111 ausgespart. Der erste Rohrstutzen 109 und die Einlassöffnung 111 dienen als Rauchgaseinlass für das Nachheizregister 101. Weiterhin ist auf der Außenseite der Deckwand 104 ein zweiter Rohrstutzen 110 zur strömungstechnischen Verbindung des Nachheizregisters 101 mit einem Kamin bzw. Schornstein angeformt. Der zweite Rohrstutzen 110 kann beispielsweise über ein (nicht dargestelltes) Rauchgasrohr mit dem Kamin verbunden werden. Innerhalb des zweiten Rohrstutzens 110 ist die Deckwand 104 mit einer in den Hohlraum 103 mündenden Auslasslöffnung 112 versehen. Der zweite Rohrstutzen 110 und die Auslassöffnung 112 dienen als Rauchgasauslass für das Nachheizregister 101.

Im Hohlraum 103 des Gehäuses 102 befindet sich eine vertikale Trennwand 113, die sich von der dem Hohlraum 103 zugewandten Innenseite der Deckwand 104 in Richtung zur Bodenwand 105 erstreckt, jedoch nicht ganz bis zur Bodenwand 105 reicht. Die Trennwand 113 verbindet zwei gegenüberliegende Seitenwände 106 miteinander (in Fig. 1B die hintere Seitenwand und die vordere Seitenwand) und trennt somit in diesem Bereich den Hohlraum 103 in einen auf der einen Seite der Trennwand 113 befindlichen (in Fig. 1B linken) ersten Hohlraumabschnitt 114 und einen auf der anderen Seite der Trennwand 113 befindlichen (in Fig. 1B rechten) dritten Hohlraumabschnitt 116, die unterhalb der Trennwand 113 durch einen (in Fig. 1B unteren bzw. bodenseitigen) zweiten Hohlraumabschnitt 115 kommunizieren. Wie durch die Pfeile angegeben, wird durch den ersten, zweiten und dritten Hohlraumabschnitt 114-116 ein die Einlassöffnung 111 mit der Auslassöffnung 112 strömungstechnisch verbindender, erster Strömungskanal 117 geformt. Im ersten Strömungskanal 117 werden die an der Einlassöffnung 111 in Form einer vertikal abwärts gerichteten Rauchgasströmung eintretenden Rauchgase in eine horizontale Rauchgasströmung umgelenkt, anschließend in eine vertikal aufwärts gerichtete Rauchgasströmung umgelenkt und über die Auslassöffnung 112 abgegeben.

In den ersten Hohlraumabschnitt 114 des ersten Strömungskanals 117 ist ein im Querschnitt als rechteckförmiger Hohlkörper ausgebildeter Wärmetauscher 118 eingesetzt, der von den Rauchgasen im ersten Strömungskanal 117 für eine Wärmeabgabe durchströmt werden kann, wobei die Rauchgase in Kontakt mit einer inneren Wärmeübertragungsfläche 137 gelangen. Der Wärmetauscher 118 reicht von der Deckwand 104 in etwa bis zur Höhe des bodenseitigen Endes der vertikalen Trennwand 113. Der Wärmetauscher ist somit lediglich in einem ersten Kanalabschnitt 135 des ersten Strömungskanals 117 angeordnet. Er ist mit einer Vorlauföffnung 119 zum Zuleiten von Fluid, beispielsweise Wasser, und einer Rücklauföffnung 120 zum Ableiten des durch die heißen Rauchgase erwärmten Fluids versehen. Über die Wärmeübertragungsfläche 137 wird das zirkulierende Fluid durch die heißen Rauchgase erwärmt. Somit erwärmen die in den ersten Strömungskanal 117 eintretenden heißen Rauchgase zunächst im ersten Kanalabschnitt 135 das Fluid des Wärmetauschers 118 und geben anschließend in einem zweiten Kanalabschnitt 136, welcher vom ersten Kanalabschnitt 135 verschieden und stromabwärts des ersten Kanalabschnitts 135 angeordnet ist, Wärme an das Gehäuse 102 ab. Durch das Nachheizregister 101 können dadurch sowohl das Fluid des Wärmetauschers 118 als auch die Umgebung des Nachheizregisters 101 durch Strahlungswärme geheizt werden. Der Wärmetauscher 118 kann beispielsweise mit einem Pufferspeicher einer zentralen Gebäudeheizung thermisch gekoppelt werden.

Die Seitenwände 106 des Gehäuses 102 im Bereich des dritten Hohlraumabschnitts 116 sowie im Bereich eines auslassseitig einer fluchtenden Verlängerung der Trennwand 113 befindlichen Teils des zweiten Hohlraumabschnitts 115 sind mit Schamottesteinen 121 verkleidet. Hierdurch kann eine zu starke Abkühlung der Rauchgase vermieden werden in deren Folge eine Versottung des mit der Auslassöffnung 112 verbundenen Rauchgasrohrs bzw. Kamins auftreten kann. Die Bodenwand 105 ist mit einer nicht näher dargestellten Reinigungsöffnung 125 versehen, die mit einem abnehmbaren Deckel 126 verschlossen ist. Durch die Reinigungsöffnung 125 kann der Hohlraum 103 gereinigt werden.

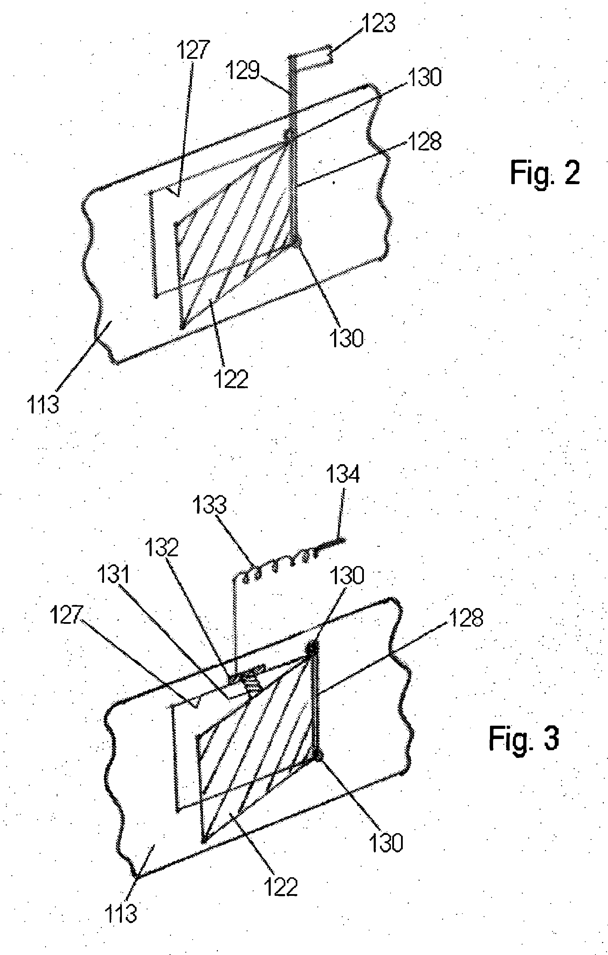

Die Trennwand 113 ist mit einer in Fig. 2 dargestellten Durchbrechung 127 versehen, die durch eine an der Trennwand 113 mittels Schwenkgelenke 130 schwenkbar angebrachte Stellklappe 122 verschlossen und geöffnet werden kann. Die hier beispielsweise um eine vertikale Schwenkachse 128 verschwenkbare Stellklappe 122 kann zu diesem Zweck über einen Schwenkarm 129 mittels eines Handgriffs 123 in eine Öffnungsstellung, bei der die Durchbrechung 127 freigegeben ist, und in eine Schließstellung, bei der die Durchbrechung 127 verschlossen ist, manuell verschwenkt werden. Wenn sich die Stellklappe 122 in Schließstellung befindet, ist die Einlassöffnung 111 ausschließlich über den ersten Strömungskanal 117 mit der Auslassöffnung 112 strömungstechnisch verbunden. Wie in Fig. 1 durch den Pfeil angegeben, wird andererseits bei in Öffnungsstellung befindlicher Stellklappe 122 ein zweiter Strömungskanal 124 gebildet, durch den die Einlassöffnung 111 mit der Auslassöffnung 112 strömungstechnisch verbunden ist. Der zweite Strömungskanal 124 verbindet den ersten Hohlraumabschnitt 114 direkt mit dem dritten Hohlraumabschnitt 116, wobei den Wärmetauscher 118 in der Art eines Bypass größtenteils umgangen wird. Im zweiten Strömungskanal 124 werden die durch die Einlassöffnung 111 in den ersten Hohlraumabschnitt 114 mit einer vertikal abwärts gerichteten Rauchgasströmung einretenden Rauchgase in eine horizontale Rauchgasströmung umgelenkt und dem dritten Hohlraumabschnitt 116 zugeleitet, wo sie in eine vertikal aufwärts gerichtete Rauchgasströmung umgelenkt werden und durch die Auslassöffnung 112 austreten können. Somit sind bei in Öffnungsstellung befindlicher Stellklappe 122 die Einlassöffnung 111 und die Auslassöffnung 112 sowohl durch den ersten Strömungskanal 117 als auch durch den zweiten Strömungskanal 124 strömungstechnisch miteinander verbunden. Liegt nun während des Betriebs der Feuerungsanlage ein Unterdruck an der Auslassöffnung 112 an, durch den die Rauchgase von der Einlassöffnung 111 zur Auslassöffnung 112 gezogen werden, so werden die Rauchgase aufgrund des geringeren Strömungswiderstands im Wesentlichen durch den zweiten Strömungskanal 124 zur Auslassöffnung 12 gezogen. Die Rauchgase kommen bei geöffneter Stellklappe 122 dadurch praktisch nur mit einem oberen ersten Flächenabschnitt 138 der Wärmeübertragungsfläche 137 in Kontakt, werden dann umgelenkt und passieren die Durchbrechung 127. Ein stromabwärts des ersten Flächenabschnitts 138 befindlicher, zweiter Flächenabschnitt 139 der Wärmeübertragungsfläche 138 gelangt dagegen nicht bzw. nur in sehr geringem Umfang in Kontakt mit den Rauchgasen, so dass der zweite Flächenabschnitt 139 von den Rauchgasen thermisch entkoppelt ist. Da der erste Flächenabschnitt 138 wesentlich kleiner ist als der zweite Flächenabschnitt 139, wird bei geöffneter Stellklappe 122 nur sehr wenig Wärme von den Rauchgasen auf das Fluid im Wärmetauscher übertragen, so dass die Rauchgase durch den Wärmetauscher praktisch nicht gekühlt werden.

Für den Betrieb der Feuerungsanlage ist es vorteilhaft, wenn die Stellklappe 122 beim Anheizen mittels des Handgriffs 123 manuell in ihre die Durchbrechung 127 freigebende Öffnungsstellung gebracht wird, so dass die durch die Einlassöffnung 111 eintretenden Rauchgase in der Anheizphase im Wesentlichen durch den zweiten Strömungskanal 124 zur Auslassöffnung 112 gezogen werden. Durch Umgehen des größten Teils des Wärmetauschers 118 wird den Rauchgasen im zweiten Strömungskanal 124 weniger Wärme als im ersten Strömungskanal 117 entzogen, wodurch die Feuerungsanlage schneller und leichter anbrennt. Da die Rauchgase in der Anheizphase noch eine relativ geringe Temperatur aufweisen, ist eine Überhitzung des das Nachheizregister 101 mit dem Kamin verbindenden Rauchgasrohrs nicht zu befürchten. Ist die Feuerungsanlage ausreichend angeheizt, kann die Stellklappe 122 mittels des Handgriffs 123 in ihre die Durchbrechung 127 verschließende Schließstellung gebracht werden, so dass die heißen Rauchgase ausschließlich über den ersten Strömungskanal 117 zur Auslassöffnung 112 strömen. Zu deren Abkühlung geben die Rauchgase dann Wärme an das Fluid im Wärmetauscher 118 und stromabwärts des Wärmetauschers 118 an das Gehäuse 102 ab, so dass über den Wärmetauscher 118 sowohl warmes Wasser erzeugt und über das von den Rauchgasen erhitzte Gehäuse 102 Strahlungswärme an die Umgebung abgegeben werden kann.

In Fig. 3 ist in einer schematischen Darstellung als Variante zum manuellen Bewegungsmechanismus von Fig. 2 ein selbstätiter Bewegungsmechanismus zum Bewegen der Stellklappe 122 des Nachheizregisters 101 von Fig. 1A-1B veranschaulicht. Demnach umfasst der Bewegungsmechanismus ein langgestrecktes Bimetall 131, das auf eine Temperaturänderung mit einer Änderung seiner Form reagiert, wobei das Bimetall 131, je nach anliegender Temperatur, eine erste Form oder eine hiervon veschiedene zweite Form aufweisen kann. Das Bimetall 131 wird an einem Ende von einem an der Trennwand 113 befestigten Lager 132 gehalten und ist an dessen anderen Ende an der Stellklappe 122 befestigt. Weist das Bimetall 131 die erste Form auf, liegt die Stellklappe 122 der Trennwand 113 vollständig an und verschließt hierbei die Durchbrechung 127. Weist das Bimetall 131 die zweite Form auf, gibt die Stellklappe 122 die Durchbrechung 127 frei. Das Bimetall 131 ist über einen wärmeleitenden Draht 133 mit einem Temperaturfühler 134 thermisch gekoppelt, so dass die am Temperaturfühler 134 erfasste Temperatur eine Längenänderung des Bimetalls 131 bewirken kann. Der Temperaturfühler 134 kann mit dem stromaufwärts des Nachheizregisters 101 befindlichen Rauchgas thermisch gekoppelt werden, beispielsweise indem der Temperaturfühler 134 durch eine Durchbrechung eines den Heizeinsatz mit dem ersten Rohrstutzen 109 des Nachheizregisters 101 verbindenden Rauchgasrohrs hindurchgreift, was in den Figuren nicht dargestellt ist. Der Temperaturfühler 134 kann zu diesem Zweck über eine Halterung an der Außenseite des Rauchgasrohrs gehalten sein. Ebenso wäre denkbar, dass der Temperaturfühler durch eine Durchbrechung des ersten Rohrstutzens 109 hindurchgreift, um die Temperatur des Rauchgases zu fühlen. Die eine oder andere Schwenkstellung der Stellklappe 122 wird somit über die Temperatur des dem Nachheizregister 101 zugeführten Rauchgases gesteuert. Im vorliegenden Ausführungsbeispiel ist das Bimetall 131 so ausgebildet, dass es unterhalb einer Schwelltemperatur, die hier beispielsweise 150°C beträgt, seine zweite Form und bei bzw. oberhalb der Schwelltemperatur seine erste Form aufweist. Dies hat zur Folge, dass sich die Stellklappe 122 unterhalb der Schwelltemperatur in ihrer Öffnungsstellung und bei bzw. oberhalb der Schwelltemperatur in ihrer Schließstellung befindet bzw. bei Überschreiten der Schwelltemperatur von der Öffnungsstellung in die Schließstellung und bei Unterschreiten der Schwelltemperatur von der Schließstellung in die Öffnungsstellung selbsttätig bewegt wird. Wird die Feuerungsanlage angeheizt, steigt die Temperatur des Rauchgases an, wobei die Stellklappe 122 die Durchbrechung 127 nicht verschließt und die über die Einlassöffnung 111 eintströmenden Rauchgase über den zweiten Strömungskanal 124 zur Auslassöffnung 112 strömen können. Erreicht die Temperatur des dem Nachheizregister 101 zugeführten Rauchgases die Schwelltemperatur, beispielsweise 150°C, schließt die Stellklappe 122 die Durchbrechung, so dass die über die Einlassöffnung 111 einströmenden Rauchgase nur über den ersten Strömungskanal 117 zur Auslassöffnung 112 strömen können. Wird kein Brennstoff mehr nachgeheizt, fällt die Temperatur des dem Nachheizregister 101 zugeführten Rauchgases ab, wobei unterhalb der Schwelltemperatur die Stellklappe 122 die Durchbrechung 127 wieder freigibt und die über die Einlassöffnung 111 eintströmenden Rauchgase über den zweiten Strömungskanal 124 zur Auslassöffnung 112 strömen können.

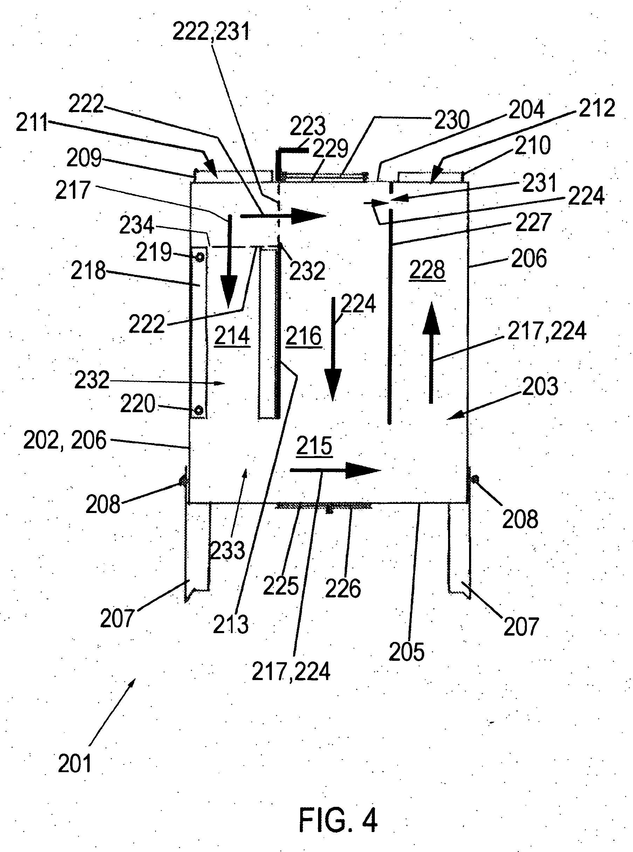

Es wird nun Bezug auf Figur 4 genommen, worin in einer schematischen Vertikalschnittdarstellung ein zweites Ausführungsbeispiel des erfindungsgemäßen Nachheizregisters für eine Feuerungsanlage zur Raumbeheizung veranschaulicht ist. In analoger Weise zu dem in Verbindung mit den Figuren 1 bis 3 veranschaulichten ersten Ausführungsbeispiels der Erfindung umfasst das Nachheizregister 201 ein beispielsweise aus Gusseisen oder Stahlblech gefertigtes Gehäuse 202 mit einem Hohlraum 203, der von einer Deckwand 204, einer Bodenwand 205 und vier Seitenwänden 206 geformt wird. Das Gehäuse 202 kann auf vier längenverstellbaren Stellfüßen 207 auf einer Unterlage platziert werden, wobei die Stellfüße 207 über Befestigungsbolzen 208 am Gehäuse 202 angebracht sind. Auf der vom Hohlraum 203 abgewandten Außenseite der Deckwand 204 ist ein erster Rohrstutzen 209 zur strömungstechnischen Verbindung des Nachheizregisters 201 mit einem Heizeinsatz der Feuerungsanlage angeformt. Innerhalb des ersten Rohrstutzens 209 ist in der Deckwand 204 eine in den Hohlraum 203 mündende Einlasslöffnung 211 ausgespart. Der erste Rohrstutzen 209 und die Einlassöffnung 211 dienen als Rauchgaseinlass für das Nachheizregister 201. Zudem ist auf der Außenseite der Deckwand 204 ein zweiter Rohrstutzen 210 zur strömungstechnischen Verbindung des Nachheizregisters 201 mit einem Kamin angeformt. Innerhalb des zweiten Rohrstutzens 210 ist die Deckwand 204 mit einer in den Hohlraum 203 mündenden Auslasslöffnung 212 versehen. Der zweite Rohrstutzen 210 und die Auslassöffnung 212 dienen als Rauchgasauslass für das Nachheizregister 201.

Im Hohlraum 203 des Gehäuses 202 befindet sich eine erste vertikale Trennwand 213, die sich von der dem Hohlraum 203 zugewandten Innenseite der Deckwand 204 in Richtung zur Bodenwand 205 erstreckt, jedoch nicht ganz bis zur Bodenwand 205 reicht. Die Trennwand 213 verbindet zwei gegenüberliegende Seitenwände 206 miteinander (in Fig. 4 die hintere Seitenwand und die vordere Seitenwand) und trennt somit in diesem Bereich den Hohlraum 203 in einen auf der einen Seite der ersten Trennwand 213 befindlichen (in Fig. 4 linken) ersten Hohlraumabschnitt 214 und einen auf der anderen Seite der Trennwand 213 befindlichen (in Fig. 4 rechten) dritten Hohlraumabschnitt 216, die unterhalb der ersten Trennwand 213 durch einen (in Fig. 4 bodenseitigen) zweiten Hohlraumabschnitt 215 miteinander verbunden sind.

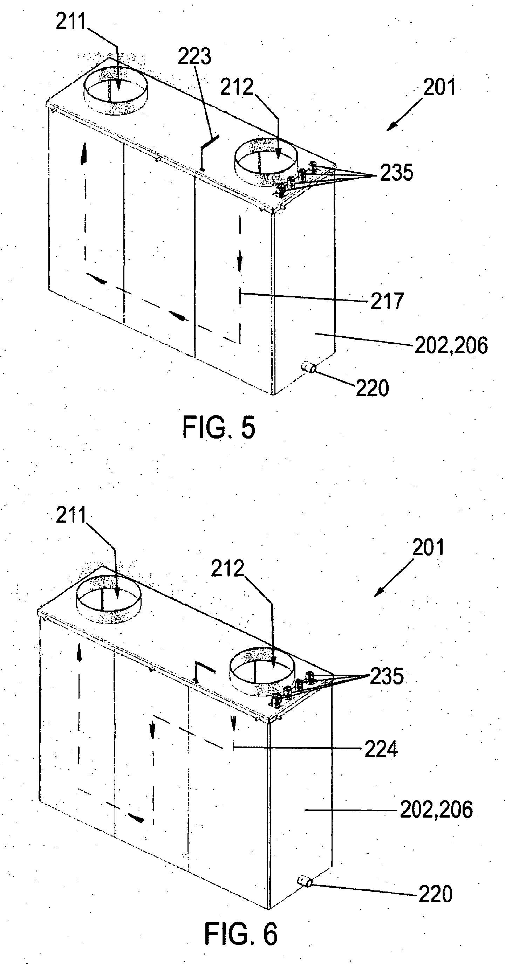

Im Hohlraum 203 des Gehäuses 202 befindet sich weiterhin eine zweite vertikale Trennwand 227, die sich wie die erste Trennwand 213 von der Innenseite der Deckwand 204 hin zur Bodenwand 205 erstreckt, jedoch ebenso nicht ganz bis zur Bodenwand 205 reicht. Die zweite Trennwand 227 verbindet zwei gegenüberliegende Seitenwände 206 miteinander (in Fig. 4 die hintere Seitenwand und die vordere Seitenwand) und trennt somit in diesem Bereich den Hohlraum 203 in den auf der einen Seite der zweiten Trennwand 227 befindlichen (in Fig. 4 linken) dritten Hohlraumabschnitt 216 und einen auf der anderen Seite der zweiten Trennwand 227 befindlichen (in Fig. 4 rechten) vierten Hohlraumabschnitt 228, die unterhalb der zweiten Trennwand 227 durch den zweiten Hohlraumabschnitt 215 miteinander verbunden sind. In den ersten Hohlraumabschnitt 214 ist ein als rechteckförmiger Hohlkörper ausgebildeter Wärmetauscher 218 eingesetzt, der von der Höhe einer Durchbrechung 231 der ersten Trennwand 213 in etwa bis zur Höhe des bodenseitigen Endes der beiden vertikalen Trennwände 213, 227 reicht. Er ist mit einer Vorlauföffnung 219 zum Zuleiten von Fluid, beispielsweise Wasser, und einer Rücklauföffnung 220 zum Ableiten des durch die heißen Rauchgase erwärmten Fluids versehen. Alternativ könnte der Wärmetauscher 218 auch bis zur Deckwand 204 reichen, wie in Fig. 5 und Fig. 6 veranschaulicht ist.

Die Durchbrechung 231 der ersten Trennwand 213 kann durch eine an der ersten Trennwand 213 schwenkbar angebrachte Stellklappe 222 verschlossen und geöffnet werden. Befindet sich die Stellklappe 222 in ihrer Schließstellung wird ein erster Strömungskanal 217 zur strömungstechnischen Verbindung der Einlassöffnung 211 mit der Auslassöffnung 212 geformt. Der erste Strömungskanal 217 wird durch den ersten Hohlraumabschnitt 214, den zweiten Hohlraumabschnitt 215 und den vierten Hohlraumabschnitt 228 gebildet. Somit wird im ersten Strömungskanal 217 die an der Einlassöffnung 211 eintretende, vertikal abwärts gerichtete Rauchgasströmung in eine horizontale Rauchgasströmung umgelenkt, in eine vertikal aufwärts gerichtete Rauchgasströmung umgelenkt und anschließend über die Auslassöffnung 212 abgegeben. Der Wärmetauscher 218 ist nur in einem Teilbereich des zweiten Strömungskanals 224 angeordnet. Somit erwärmen die in den ersten Strömungskanal 217 eintretenden heißen Rauchgase zunächst in einem ersten Kanalabschnitt 232 das Fluid des Wärmetauschers 218 und geben anschließend in einem zweiten Kanalabschnitt 233, welcher vom ersten Kanalabschnitt 232 verschieden und stromabwärts des ersten Kanalabschnitts 232 angeordnet ist, Wärme an das Gehäuse 202 ab. Durch das Nachheizregister 201 können dadurch sowohl das Fluid des Wärmetauschers 218 als auch die Umgebung des Nachheizregisters 201 durch Strahlungswärme geheizt werden.

Die Stellklappe 222 kann durch einen Handgriff 223 in ihre Öffnungs- und Schließstellung gebracht werden, wobei der Handgriff 223 mit einem herkömmlichen Mechanismus zum Umwandeln einer vertikalen Drehbewegung in eine horizontale Drehbewegung gekoppelt ist. Befindet sich die Stellklappe 222 in Öffnungsstellung wird ein zweiter Strömungskanal 224 zur strömungstechnischen Verbindung der Einlassöffnung 211 mit der Auslassöffnung 212 frei gegeben. Der zweite Strömungskanal 224 wird durch den oberen Teil des ersten Hohlraumabschnitts 214, den dritten Hohlraumabschnitt 216 und den vierten Hohlraumabschnitt 228 geformt. Somit wird im zweiten Strömungskanal 224 die an der Einlassöffnung 211 vertikal abwärts gerichtete Rauchgasströmung horizontal umgelenkt, passiert die Durchbrechung 231, wird in eine vertikal abwärts gerichtete Rauchgasströmung umgelenkt, in eine horizontale Rauchgasströmung umgelenkt, in eine vertikal aufwärts gerichtete Rauchgasströmung umgelenkt und anschließend über die Auslassöffnung 212 abgegeben.

Wenn sich die Stellklappe 222 in Öffnungsstellung befindet, ist die Einlassöffnung 211 ausschließlich über den zweiten Strömungskanal 224 mit der Auslassöffnung 212 strömungstechnisch verbunden, wobei der zweite Strömungskanal 224 den Wärmetauscher 218 in der Art eines Bypass vollständig umgeht. Somit sind die Rauchgase von der Einlassöffnung 211 bis zur Auslassöffnung 212 vom Wärmetauscher 218 thermisch entkoppelt. Die Stellklappe 222 trennt in Öffnungsstellung den ersten Strömungskanal 217 stromaufwärts des Wärmetauschers 218 von der Einlassöffnung 211 ab. Dies kann beispielsweise dadurch erfolgen, dass die Stellklappe 222 in Öffnungsstellung eine Mündung 234 des Wärmetauschers 218, durch welche die heißen Rauchgase eintreten, verschließt. Andererseits erwärmen die heißen Rauchgase im zweiten Strömungskanal 224 das Gehäuse 202, so dass die Umgebung durch Strahlungswärme geheizt werden kann. Durch die einmalige Umlenkung der heißen Rauchgase stromabwärts der Stellklappe kann den Rauchgasen relativ viel Wärme entzogen werden, wobei gleichsam ein vollwertiges Nachheizregister mit einer einmaligen Umlenkung der Rauchgase zur Verfügung steht. Um eine übermäßige Abkühlung der Rauchgase zu vermeiden, kann der zweite Strömungskanal 224 stromabwärts der Stellklappe 222 beispielsweise mit Schamottesteinen versehen sein, was in Fig. 4 nicht dargestellt ist. Die Bodenwand 205 ist mit einer nicht näher dargestellten ersten Reinigungsöffnung 225 versehen, die mit einem abnehmbaren ersten Deckel 226 verschlossen ist. Durch die erste Reinigungsöffnung 225 kann der Hohlraum 203 gereinigt werden. Weiterhin ist die Deckwand 204 mit einer nicht näher dargestellten zweiten Reinigungsöffnung 229 versehen, die mit einem abnehmbaren zweiten Deckel 230 verschlossen ist. Durch die zweite Reinigungsöffnung 229 kann der Hohlraum 203 ebenfalls gereinigt werden.

Für den Betrieb der Feuerungsanlage ist es vorteilhaft, wenn die Stellklappe 222 beim Anheizen mittels des Handgriffs 223 manuell in Öffnungsstellung gebracht wird, so dass die durch die Einlassöffnung 211 eintretenden Rauchgase im Wesentlichen durch den zweiten Strömungskanal 224 zur Auslassöffnung 212 gezogen werden. Diese Betriebsweise des Nachheizregisters 201 ist in Fig. 6 veranschaulicht. Im zweiten Strömungskanal 224 wird den Rauchgasen durch die vollständige Umgehung des Wärmetauschers 218 weniger Wärme als im ersten Strömungskanal 217 entzogen, so dass die Feuerungsanlage schneller und leichter anbrennt. Ist die Feuerungsanlage ausreichend angeheizt, kann die Stellklappe 222 mittels des Handgriffs 223 in ihre Schließstellung gebracht werden, so dass die heißen Rauchgase nun ausschließlich über den ersten Strömungskanal 217 zur Auslassöffnung 212 strömen. Diese Betriebsweise des Nachheizregisters 201 ist in Fig. 5 veranschaulicht. Alternativ ist auch möglich, dass anstelle eines manuellen Bewegungsmechanismus für die Stellklappe 222, analog zum Nachheizregister 101 gemäß dem ersten Ausführungsbeispiel der Erfindung, ein selbstätiger Stellmechanismus mit einem an der Stellklappe 222 angreifenden Bimetall, durch das die Stellklappe 222 in ihre Öffnungs- und Schließstellung gebracht werden kann, und einem mit dem Bimetall 222 thermisch gekoppelten Temperaturfühler zum Erfassen der Temperatur der dem Nachheizregister 201 zugeführten Rauchgase vorgesehen ist. Ebenso könnte die Stellklappe 222 des Nachheizregisters 201 von Fig. 4, analog zu dem Nachheizregister von Fig. 1, um eine vertikale Schwenkachse verschwenkbar sein.

Wie bereits erwähnt, ist in Fig. 5 und Fig. 6 eine Variante veranschaulicht, bei der der Wärmetauscher 218 bis zur Deckwand 204 reicht. Der Wärmetauscher 218 ist mit einer Mehrzahl Anschlüsse 235 in der Deckwand 204 versehen, hierunter die Anschlüsse für eine thermische Ablaufsicherung, durch welche eine Überhitzung des Wärmetauschers 218 vermieden werden kann. Die thermische Ablaufsicherung umfasst einen Temperaturfühler zum Messen der Temperatur des im Wärmetauscher zirkulierenden Fluids, sowie einen über ein Ventil geschlossenen Wasserzulauf, für den ein Anschluss 235 vorgesehen ist, und einen mit dem Wasserzulauf kommunizierenden Wasserablauf, für den ein anderer Anschluss 235 vorgesehen ist. Das Ventil ist mit dem Temperaturfühler so wirkgekoppelt, dass es aufmacht, wenn die Temperatur des Fluids einen wählbaren Schwellwert übersteigt.

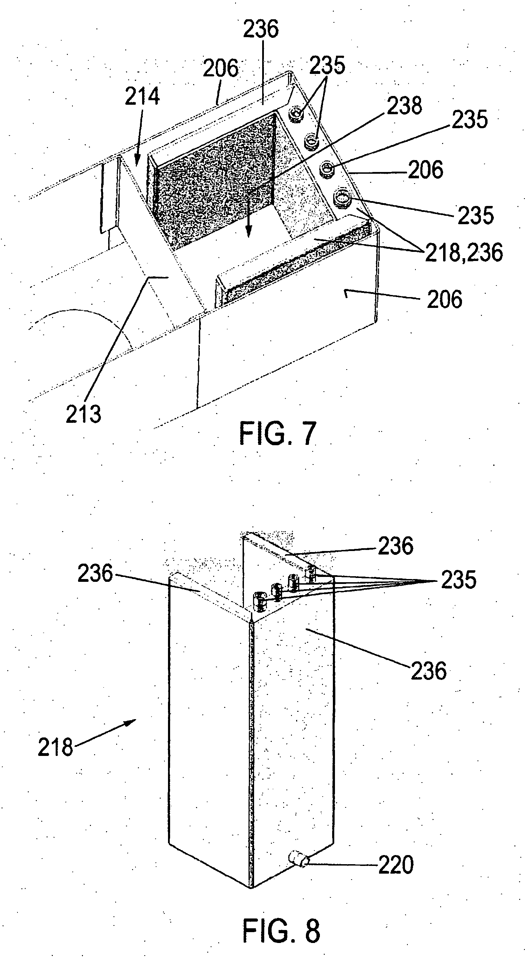

Wie näher in Fig. 7 gezeigt ist, ist der in Form eines Moduls ausgebildete Wärmetauscher 218 in den ersten Hohlraumabschnitt 215 des ersten Strömungskanals 217 austauschbar eingesetzt, was eine einfache Nachrüstung oder Wartung ermöglicht. Der Wärmetauscher 218 kann zumindest gedanklich in drei plattenförmige Abschnitte 236 unterteilt werden, welche wie die Seiten eines Quaders angeordnet sind. Auf ihrer Innenseite weisen die plattenförmigen Abschnitte 236 jeweils eine Wärmeübertragungsfläche 237 zur Übertragung von Wärme von den heißen Rauchgasen auf das im Wärmetauscher 218 zirkulierende Fluid auf. Zusammen mit der ersten Trennwand 213 formen die drei plattenförmigen Abschnitte 236 einen zumindest annähernd quaderförmigen Hohlraum 238 der einen Abschnitt des ersten Strömungskanals 217 darstellt. Durch diese spezielle Gestaltung des Wärmetauschers 218 kann eine geringere Kühlung des Rauchgases im Vergleich zu einem Wärmetauscher, welcher den Hohlraum 238 auf allen vier Seiten umgibt, erreicht werden. Es versteht sich, dass der Wärmetauscher 218 gleichermaßen aus nur aus zwei oder lediglich einem plattenförmigen Abschnitt 236 bestehen kann, um auf diese Weise die Kühlung der Rauchgase gezielt auf die Bedürfnisse der Nutzer anzupassen.

Die anhand der Figuren veranschaulichten Nachheizregister dienen lediglich als Ausführungsbeispiele und sollen die Erfindung in keine Weise einschränken. Vielmehr können hieran in mannigfaltiger Weise Änderungen und Modifikationen vorgenommen werden, ohne aus dem Schutzumfang der Erfindung zu gelangen. Beispielsweise können für einen selbstätigen Bewegungsmechanismus zur Bewegung der Stellklappe anstelle eines Bimetalls ein mit einem Temperaturfühler gekoppelter Aktuator, wie eine hydraulische Kolben-Zylinder-Einheit oder ein Elektromotor vorgesehen sein. Denkbar wäre ebenso, dass ein weiterer Temperaturfühler zur thermischen Kopplung mit einem mit dem Wärmetauscher thermisch gekoppelten Warmwasser-Pufferspeicher vorgesehen ist, der mit einem selbsttätigen Bewegungsmechanismus zum Bewegen der Stellklappe so wirkverbunden ist, dass der erste Strömungskanal vom Rauchgaseinlass getrennt wird, sobald die Temperatur des Pufferspeichers einen bestimmten Schwellwert überschreitet und dass der erste Strömungskanal mit dem Rauchgaseinlass verbunden wird, sobald die Temperatur des Pufferspeichers den Schwellwert unterschreitet. Der Bewegungsmechanismus könnte in diesem Fall ein mit dem Temperaturfühler thermisch gekoppeltes Bimetall zum Bewegen der Stellklappe oder einen anderen Aktuator umfassen.

### Bezugszeichenliste

- 101: Nachheizregister
- 102: Gehäuse
- 103: Hohlraum
- 104: Deckwand
- 105: Bodenwand
- 106: Seitenwand
- 107: Stellfuß
- 108: Befestigungsbolzen
- 109: erster Rohrstutzen
- 110: zweiter Rohrstutzen
- 111: Einlassöffnung
- 112: Auslassöffnung
- 113: Trennwand
- 114: erster Hohlraumabschnitt
- 115: zweiter Hohlraumabschnitt
- 116: dritter Hohlraumabschnitt
- 117: erster Strömungskanal
- 118: Wärmetauscher
- 119: Vorlauföffnung
- 120: Rücklauföffnung
- 121: Schamottestein
- 122: Stellklappe
- 123: Handgriff
- 124: zweiter Strömungskanal
- 125: Reinigungsöffnung
- 126: Deckel
- 127: Durchbrechung
- 128: Schwenkachse
- 129: Schwenkarm
- 130: Schwenkgelenk
- 131: Bimetall
- 132: Lager
- 133: Draht
- 134: Temperaturfühler
- 135: erster Kanalabschnitt
- 136: zweiter Kanalabschnitt
- 137: Wärmeübertragungsfläche
- 138: erster Flächenabschnitt
- 139: zweiter Flächenabschnitt
- 201: Nachheizregister
- 202: Gehäuse
- 203: Hohlraum
- 204: Deckwand
- 205: Bodenwand
- 206: Seitenwand
- 207: Stellfuß
- 208: Befestigungsbolzen
- 209: erster Rohrstutzen
- 210: zweiter Rohrstutzen
- 211: Einlassöffnung
- 212: Auslassöffnung
- 213: erste Trennwand
- 214: erster Hohlraumabschnitt
- 215: zweiter Hohlraumabschnitt
- 216: dritter Hohlraumabschnitt
- 217: erster Strömungskanal
- 218: Wärmetauscher
- 219: Vorlauföffnung
- 220: Rücklauföffnung
- 222: Stellklappe
- 223: Handgriff
- 224: zweiter Strömungskanal
- 225: erste Reinigungsöffnung
- 226: erster Deckel
- 227: zweite Trennwand
- 228: vierter Hohlraumabschnitt
- 229: zweite Reinigungsöffnung
- 230: zweiter Deckel
- 231: Durchbrechung
- 232: erster Kanalabschnitt
- 233: zweiter Kanalabschnitt
- 234: Mündung
- 235: Anschluss
- 236: Abschnitt
- 237: Wärmeübertragungsfläche
- 238: Hohlraum

## Patentansprüche

1. Nachheizregister (101; 201) für Feuerungsanlage zur Raumbeheizung, mit einem Gehäuse (102; 202), das einen Hohlraum (103; 203) formt, in den ein mit einem Feuerraum der Feuerungsanlage verbindbarer Rauchgaseinlass (109, 111; 209, 211) und ein mit einem Kamin verbindbarer Rauchgasauslass (110, 112; 210, 212) münden, wobei Rauchgasein- und Rauchgasauslass durch wenigstens einen Strömungskanal (117, 124; 217, 224) für Rauchgase miteinander verbunden sind, **dadurch gekennzeichnet, dass** im Hohlraum (103; 203) ein erster Strömungskanal (117; 217) und ein zumindest abschnittsweise vom ersten Strömungskanal (117; 217) verschiedener zweiter Strömungskanal (124; 224) geformt sind, wobei der erste Strömungskanal (117; 217) so ausgebildet ist, dass die darin strömenden Rauchgase mit einem Wärmetauscher (118; 218) thermisch gekoppelt sind und der zweite Strömungskanal (124; 224) so ausgebildet ist, dass die Rauchgase zumindest von einem Teil des Wärmetauschers (118; 218) thermisch entkoppelt sind, und wobei durch ein Sperrelement (122, 127; 222, 231), das mittels eines Bewegungsmechanismus (123, 128-130; 131-134) wahlweise in eine Öffnungs- und Schließstellung gebracht werden kann, der Rauchgasauslass (110, 112; 210, 212) durch den zweiten Strömungskanal (124; 224) mit dem Rauchgaseinlass (109, 111; 209, 211) verbindbar und der zweite Strömungskanal (124; 224) zumindest abschnittsweise vom Rauchgaseinlass (109, 111; 209, 211) trennbar ist.

2. Nachheizregister (101; 201) nach Anspruch 1, **dadurch gekennzeichnet, dass** der zweite Strömungskanal (124; 224) so ausgebildet ist, dass die darin strömenden Rauchgase vom Rauchgaseinlass (109, 111; 209, 211) bis zum Rauchgasauslass (110, 112; 210, 212) vom Wärmetauscher (118; 218) thermisch entkoppelt sind.

3. Nachheizregister (101; 201) nach einem der Ansprüche 1 oder 2, **dadurch gekennzeichnet, dass** der erste Strömungskanal (117; 217) einen ersten Kanalabschnitt (135; 232) und einen stromabwärts des ersten Kanalabschnitts (135; 232) angeordneten zweiten Kanalabschnitt (136; 233) umfasst, wobei der erste Kanalabschnitt so ausgebildet ist, dass die darin strömenden Rauchgase mit dem Wärmetauscher (118; 218) thermisch gekoppelt sind, und wobei der zweite Kanalabschnitt so ausgebildet ist, dass die darin strömenden Rauchgase vom Wärmetauscher thermisch entkoppelt und zumindest abschnittsweise mit dem Gehäuse (102; 202) thermisch gekoppelt sind.

4. Nachheizregister (101; 201) nach Anspruch 3, **dadurch gekennzeichnet, dass** der zweite Kanalabschnitt (136; 233) zumindest abschnittsweise mit einem Wärme speichernden Material, beispielsweise Schamottesteinen, ausgekleidet ist.

5. Nachheizregister (101; 201) nach einem der Ansprüche 1 bis 4, **dadurch gekennzeichnet, dass** der zweite Strömungskanal (124; 224) so ausgebildet ist, dass die Rauchgase stromabwärts des Stellelments vom Wärmetauscher thermisch entkoppelt und zumindest abschnittsweise mit dem Gehäuse (102; 202) thermisch gekoppelt sind.

6. Nachheizregister (101; 201) nach Anspruch 5, **dadurch gekennzeichnet, dass** der zweite Strömungskanal (124; 224) stromabwärts des Stellelments zumindest abschnittsweise mit einem Wärme speichernden Material, beispielsweise Schamottesteinen, ausgekleidet ist.

7. Nachheizregister (101; 201) nach einem der Ansprüche 1 bis 6, **dadurch gekennzeichnet, dass** der Wärmetauscher (118; 218) in Form eines austauschbaren Moduls ausgebildet ist.

8. Nachheizregister (101; 201) nach Anspruch 7, **dadurch gekennzeichnet, dass** der Wärmetauscher (118; 218) in den ersten Strömungskanal (117; 217) eingesetzt und von Rauchgas durchströmbar ist.

9. Nachheizregister (101; 201) nach einem der Ansprüche 1 bis 8, **dadurch gekennzeichnet, dass** der Wärmetauscher (118; 218) mit einer thermischen Ablaufsicherung koppelbar ist.

10. Nachheizregister (101, 201) nach einem der Ansprüche 1 bis 9, **dadurch gekennzeichnet, dass** der Wärmetauscher (118; 218) auf einer Außenseite des Gehäuses (102; 202) angebracht ist.

11. Nachheizregister (101; 201) nach Anspruch 10, **dadurch gekennzeichnet, dass** der Wärmetauscher (118; 218) derart auf der Außenseite des Gehäuses (102; 202) angebracht ist, dass er mit der Feuerungsanlage thermisch koppelbar ist.

12. Nachheizregister (101; 201) nach einem der Ansprüche 1 bis 11, **dadurch gekennzeichnet, dass** das Sperrelement (122, 127; 222, 231) ein Stellelement (122, 222) umfasst, das einer Durchbrechung (127, 231) in einer den zweiten Strömungskanal (124; 224) vom Rauchgaseinlass (109, 111; 209, 211) trennenden Trennwand (113; 213) zugeordnet ist, wobei das Stellelement (122;, 222) in Öffnungsstellung die Durchbrechung (127; 231) freigibt und in Schließstellung die Durchbrechung (127; 231) verschließt.

13. Nachheizregister (101; 201) nach einem der Ansprüche 1 bis 12, **dadurch gekennzeichnet, dass** in Öffnungsstellung des Sperrelements (122, 127; 222, 231) der Rauchgaseinlass (109, 111; 209, 211) und der Rauchgasauslass (110, 112; 210, 212) durch die beiden Strömungskanäle (117, 124; 217, 224) jeweils miteinander verbunden sind, wobei die Strömungskanäle so ausgebildet sind, dass bei einem am Rauchgasauslass wirkenden Unterdruck über den Rauchgaseinlass herangeführte Rauchgase überwiegend durch den zweiten Strömungskanäl (124; 224) strömen.

14. Nachheizregister (101; 201) nach einem der Ansprüche 1 bis 13, **dadurch gekennzeichnet, dass** das Sperrelement (122, 127; 222, 231) über einen mechanischen Bewegungsmechanismus in Öffnungs- und Schließstellung bewegbar ist, wobei der Bewegungsmechanismus eine Handhabe (123; 223) zum Überführen des Sperrelements in Öffnungs- und Schließstellung umfasst.

15. Nachheizregister (101; 201) nach einem der Ansprüche 1 bis 14, **dadurch gekennzeichnet, dass** der Bewegungsmechanismus ein mit einem Temperaturfühler thermisch gekoppeltes Bimetall (131) umfasst, durch das das Sperrelement (122, 127; 222, 231) in Öffnungs- und Schließstellung gebracht werden kann, wobei der Bewegungsmechanismus mit einem mit dem Rauchgas stromaufwärts des Wärmetauschers (118; 218) thermisch koppelbaren Temperaturfühler (134) derart wirkverbunden ist, dass das Sperrelement (122, 127; 222, 231) bei ansteigender Rauchgastemperatur bei Erreichen einer wählbaren Schwelltemperatur in Schließstellung und bei absinkender Rauchgastemperatur bei Unterschreiten der Schwelltemperatur in Öffnungsstellung gebracht wird.

## Claims

1. Post-heating register (101; 201) for a combustion plant for heating spaces, with a housing (102; 202), that forms a cavity (103; 203) into which a flue gas inlet (109, 111; 209, 211) that can be connected to a combustion chamber of the combustion plant and a flue gas outlet (110, 112; 210, 212) that can be connected to a chimney emerge, where flue gas inlet and outlet are connected by at least one flow channel (117, 124; 217, 224) for flue gases, **characterised in that** a first flow channel (117, 217) and a second flow channel (124; 224) that differs from the first flow channel (l17; 217) in at least a section are formed in the cavity (103; 203), where the first flow channel (117, 217) is designed such that the flue gases flowing through it are thermally coupled with a heat exchanger (118; 218) and the second flow channel (124; 224) is designed such that the flue gases are thermally decoupled from at least a part of the heat exchanger (118; 218), and wherein, by means of a locking element (122, 127, 222, 231) that can be brought optionally into an open or closed position by means of a movement mechanism (123, 128-130; 131-134), the flue gas outlet (110, 112; 210, 212) can be connected to the flue gas inlet (109, 111; 209, 211) by means of the second flow channel (124; 224) and the second flow channel (124; 224) can be separated over at least a section from the flue gas inlet (109, 111; 209, 211).

2. Post-heating register (101; 201) according to claim 1, **characterised in that** the second flow channel (124; 224) is designed such that the flue gases flowing therein are thermally decoupled from the heat exchanger (118; 218) from the flue gas inlet (109, 111; 209, 211) to the flue gas outlet (110, 112; 210, 212).

3. Post-heating register (101; 201) according to one of the claims 1 or 2, **characterized in that** is the first flow channel (117; 217) includes a first channel section (135; 232) and a second channel section (136; 233) arranged downstream of the first channel section (135; 232), wherein the first channel section is designed such that the flowing flue gases therein are thermally coupled with the heat exchanger (118; 218) and wherein the second channel section is designed such that the flowing flue gases therein are thermally decoupled from the heat exchanger and at least in a section are thermally coupled with the housing (102; 202).

4. Post-heating register (101; 201) according to claim 3, **characterized in that** at least a part of the second channel section (136; 233) is lined with a heat storing material, for example, firebricks.

5. Post-heating register (101; 201) according to one of the claims 1 to 4, **characterized in that** the second flow channel (124; 224) is designed such that the flue gas downstream of the actuator are thermally decoupled from the heat exchanger and at least a section is thermally coupled with the housing (l02; 202).

6. Post-heating register (101; 201) according to claim 5, **characterized in that** at least a section of the second flow channel (124; 224) downstream of the actuator is lined with a heat storing material, for example, firebricks.

7. Post-heating register (101; 201) according to one of the claims 1 to 6, characterized that the heat exchanger (l18; 218) is embodied in the form of a replaceable module.

8. Post-heating register (101; 201) according to claim 7, **characterised in that** the heat exchanger (118; 218) is inserted in the first flow channel (117, 217) and flue gas can be flowed through it.

9. Post-heating register (101; 201) according to one of the claims 1 to 8, **characterised in that** the heat exchanger (l18; 218) can be coupled with a thermal discharge safety device.

10. Post-heating register (101; 201) according to one of the claims 1 to 9, **characterised in that** the heat exchanger (118; 218) is mounted on an outer side of the housing (102, 202).

11. Post-heating register (101; 201) according to claim 10, characterized that the heat exchanger (118; 218) is attached to the outside of the casing (102; 202) in such a way that it can be thermally coupled to the combustion plant.

12. Post-heating register (101; 201) according to one of the claims 1 to 11, characterized that the locking element (122, 127; 222, 231) includes an actuator (122, 222) that is assigned to a cut-out (127, 231) in a partition (113, 213) separating the second flow channel (124; 224) from the flue gas inlet (109, 111; 209, 211) wherein the adjustment control (122; 222) releases the opening (127, 231) in the open position and closes the opening (127, 231) in the closed position.

13. Post-heating register (101; 201) according to one of the claims 1 to 12, **characterised in that** in open position of the locking element (122, 127; 222, 231) the flue gas inlet (109, 111; 209, 211) and the flue gas outlet (110, 112; 210, 212) are respectively connected to each other through the two flow channels (117, 124; 217, 224), wherein the flow channels are designed in such a way that, in the case where a negative pressure is acting on the flue gas outlet, flue gases transported via the flue gas inlet predominantly pass through the second flow channel (124; 224).

14. Post-heating register (101; 201) according to one of the claims 1 to 13, **characterised in that** the locking element (122, 127; 222, 231) can be moved into an open or closed position by means of a mechanical movement mechanism, wherein the movement mechanism includes a handle (123; 223) for transferring the locking element to an open and a closed position.

15. Post-heating register (101; 201) according to one of the claims 1 to 14, **characterised in that** the movement mechanism includes a bimetal thermally coupled with a temperature sensor (131), by means of which the locking element (122, 127, 222, 231) can be brought into an open and closed position, wherein the movement mechanism is operatively connected to a thermally coupled temperature sensor (134) upstream of the flue gas of the heat exchanger (118; 218) such that the locking element (122, 127; 222, 231) is brought into the closed position, as the flue gas temperature rises, upon reaching a selectable threshold temperature and as the flue gas temperature falls, is brought into an open position when it passes below the threshold temperature.

## Revendications

1. Registre de post-chauffage (101, 201) pour installation de combustion pour le chauffage des locaux, avec un boîtier (102, 202) formant une cavité (103; 203) dans laquelle débouchent une admission de gaz de combustion (109, 111; 209, 211) pouvant être connectée à la chambre de combustion et une sortie de gaz de combustion (110, 112; 210, 212) pouvant être connectée à une cheminée, où l'admission et la sortie des gaz de combustion sont reliées par au moins un canal d'écoulement (117,124; 217, 224) pour les gaz de combustion, **caractérisé en ce qu'**un premier canal d'écoulement (117, 217) et un deuxième canal d'écoulement (124; 224) qui est au moins pour une segment différent du premier canal d'écoulement (l17; 217) sont formés dans la cavité (103; 203), où le premier canal d'écoulement (117; 217) est conçu de telle sorte que les gaz de combustion qui y coulent soient couplés thermiquement à un échangeur de chaleur (118; 218) et le deuxième canal d'écoulement (124; 224) est conçu de telle sorte que les gaz de combustion soient thermiquement découplées au moins d'une partie de l'échangeur de chaleur (118; 218) et où un élément de blocage (122, 127; 222, 231) peut être déplacé au choix en position d'ouverture ou de fermeture, au moyen d'un mécanisme de déplacement (123, 128-130; 131-134), la sortie de gaz de combustion (110, 112; 210, 212) pouvant être connectée par le canal d'écoulement (124; 224) avec l'admission de gaz de combustion (109, 111, 209, 211) et le deuxième canal d'écoulement (124; 224) au moins pour certaines segments pouvant être séparé de l'admission de gaz de combustion (109, 111; 209, 211).

2. Registre de post-chauffage (101; 201) selon la revendication 1, **caractérisé en ce que** le deuxième canal d'écoulement (124; 224) est conçu de telle manière que les gaz de combustion qui coulent dedans soient thermiquement découplés de l'échangeur de chaleur (118; 218) à partir de l'admission de gaz de combustion (109, 111; 209, 211) jusqu'à la sortie de gaz de combustion (110, 112; 210, 212).

3. Registre de post-chauffage (101, 201) selon l'une des revendications 1 ou 2, **caractérisé en ce que** le premier canal d'écoulement (117; 217) comprend un premier segment de canal (135; 232) et un deuxième segment de canal (135; 232) disposé en aval du premier segment de canal (l36; 233), où le premier segment de canal est conçu de telle manière que les gaz de combustion qui coulent dedans soient thermiquement couplés avec l'échangeur de chaleur (118; 218), et où le deuxième segment de canal est conçu de telle manière que les gaz de combustion qui coulent dedans soient découplés thermiquement de l'échangeur de chaleur et au moins sur une portion couplé thermiquement avec le boîtier (l02; 202).

4. Registre de post-chauffage (101, 201) selon la revendication 3, **caractérisé en ce que** le deuxième segment de canal (136; 233), au moins sur une portion, est revêtu d'un matériau de stockage de chaleur, par exemple, des briques réfractaires.

5. Registre de post-chauffage (101; 201) selon l'une des revendications 1 à 4, **caractérisé en ce que** le deuxième canal d'écoulement (124; 224) est conçu de telle manière que le gaz de combustion en aval de l'élément d'actionnement soit découplé thermiquement de l'échangeur de chaleur et au moins une certaine portion soit couplé thermiquement avec le boîtier (102; 202).

6. Registre de post-chauffage (101; 201), selon la revendication 5, **caractérisé en ce que** le deuxième canal d'écoulement (124 ; 224) en aval de l'élément d'actionnement au moins une certaine portion sont revêtus d'un matériau de stockage de chaleur, par exemple, des briques réfractaires.

7. Registre de post-chauffage (101; 201) selon l'une des revendications 1 à 6, **caractérisée en ce que** l'échangeur de chaleur (118; 218) est conçu sous forme d'un module pouvant être remplacé.

8. Registre de post-chauffage (101; 201) selon la revendication 7, **caractérisé en ce que** l'échangeur de chaleur (118; 218) est inséré dans le premier canal d'écoulement (117, 217) et le gaz de combustion peut s'écouler à travers celui-ci.

9. Registre de post-chauffage (101; 201) selon l'une des revendications 1 à 8, **caractérisé en ce que** l'échangeur de chaleur (118; 218) peut être couplé avec un dispositif de sécurité de décharge thermique.

10. Registre de post-chauffage (101; 201) selon l'une des revendications 1 à 9, **caractérisé en ce que** l'échangeur de chaleur (118; 218) est monté sur un côté extérieur du boîtier.

11. Registre de post-chauffage (101; 201) selon la revendication 10 **caractérisé en ce que** l'échangeur de chaleur (118; 218) est monté sur un côté extérieur du boîtier (102; 202) de telle manière qu'il puisse être couplé thermiquement à l'installation de combustion.

12. Registre de post-chauffage (101, 201) selon l'une des revendications 1 à 11, **caractérisé en ce que** l'élément de verrouillage (122, 127, 222, 231) comprend un élément d'actionnement (122, 222), qui est assigné à une découpure (127, 231) dans une partition (113; 213) qui sépare le deuxième canal d'écoulement (124; 224) de l'admission de gaz de combustion (109, 111, 209, 211), où l'élément d'actionnement (122; 222) débloque la découpure (127; 231) en position ouverte et ferme la découpure (127; 231) en position fermée (127; 231).

13. Registre de post-chauffage (101; 201) selon l'une des revendications 1 à 12, **caractérisé en ce qu'**en position ouverte de l'élément de verrouillage (122, 127, 222, 231) l'admission de gaz de combustion (109; 111; 209, 211) et la sortie de gaz de combustion (110, 112; 210, 212) sont respectivement reliés l'un à l'autre à travers les deux canaux d'écoulement (117, 124; 217, 224), où les deux canaux d'écoulement sont conçus de telle sorte que, lorsqu'une dépression agit sur la sortie de gaz de fumée, les gaz de combustion amenés par l'admission de gaz de combustion passent principalement à travers le deuxième canal d'écoulement (124; 224).

14. Registre de post-chauffage (101; 201) selon l'une des revendications 1 à 13, **caractérise en ce que** l'élément de verrouillage (122, 127; 222, 231) peut être déplacé en position d'ouverture ou de fermeture par un mécanisme de déplacement mécanique, où le mécanisme de déplacement comprend une poignée (123; 223) pour transporter l'élément de verrouillage en position d'ouverture et de fermeture.

15. Registre de post-chauffage (101; 201) selon l'une des revendications 1 à 14, **caractérise en ce que** le mécanisme de déplacement comprend un bilame couplé thermiquement avec une sonde de température (131) par le biais duquel l'élément de blocage (122, 127; 222, 231) peut être déplacée en position d'ouverture et de fermeture, où le mécanisme de déplacement peut être connecté fonctionnellement à une sonde de température (134) en amont des gaz de combustion de l'échangeur de chaleur (118; 218) de telle manière que l'élément de verrouillage (122, 127; 222, 231) est amené en position de fermeture lorsque la température des gaz de combustion en hausse atteigne une température seuil réglable et en position d'ouverture lorsque la température des gaz de combustion en baisse tombe en dessous du seuil de température.
